Europäisches Patentamt

European Patent Office

Office européen des brevets

(11) Veröffentlichungsnummer: **0 272 626 B1**

## (12) EUROPÄISCHE PATENTSCHRIFT

(45) Veröffentlichungstag der Patentschrift: **02.05.91**

(21) Anmeldenummer: **87118736.5**

(22) Anmeldetag: **17.12.87**

(51) Int. Cl.⁵: **B29C 45/67**

(54) **Hydraulikeinrichtung für die Formschliesseinheit einer Kunststoff-Spritzgiessmaschine.**

(30) Priorität: **23.12.86 DE 3644181**

(43) Veröffentlichungstag der Anmeldung:
**29.06.88 Patentblatt 88/26**

(45) Bekanntmachung des Hinweises auf die
Patenterteilung:
**02.05.91 Patentblatt 91/18**

(84) Benannte Vertragsstaaten:
**AT CH DE ES FR GB IT LI NL**

(56) Entgegenhaltungen:
**DE-A- 3 347 000**
**FR-A- 2 494 628**

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr.**
**Patentanwälte Dr. Mayer & Frank Westliche 24**
**W-7530 Pforzheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Hydraulikeinrichtung für die Formschließeinheit einer Kunststoff-Spritzgießmaschine mit einem in der Achse der Formschließeinheit angeordneten hydraulischen Druckzylinder zum Aufbau des Zuhaltedruckes für die Spritzgießform, dessen vom Druckkolben begrenzten Zylinderräume (Hochdruckraum, Niederdruckraum) über Überströmkanäle der Druckkolbens miteinander in Verbindung stehen, welche Überströmkanäle mittels eines hydraulisch betätigbaren Ventils absperrbar sind, mit einem hydraulischen Antriebszylinder mit einem stationären Kolben zum Schließen der Spritzgießform, dessen eigentlicher Zylinder durch die Kolbenstange des hydraulischen Druckzylinders gebildet ist, mit zwei diametral zum hydraulischen Druckzylinder angeordneten, nur einseitig beaufschlagbaren Kolben-Zylinder-Einheiten (Ausgleichszylinder) - mit Kolben-zur Aufnahme bzw. Abgabe von aus dem Druckzylinder kommenden oder an diesen abzugebenden Drucköl, wobei der Niederdruckraum mit den Zylinderräumen der Ausgleichszylinder in offener Verbindung steht, deren Kolben wie auch der Druckkolben je über die zugehörigen Kolbenstangen mit dem Formträger der Formschließeinheit verbunden sind, sowie mit einem die Öffnungsbewegung und die Schließbewegung des Antriebszylinders über einen Strecken-Spannungswandler nach einem Mengenprogramm regelnden Regelventil, welches Mengenprogramm über einen Druckfühler von einer Druckregelung überlagert ist.

Ein 'Mengenprogramm' im obigen Sinne regelt die Geschwindigkeiten des Antriebszylinders auf der Grundlage der vom Strecken-Spannungswandler vermittelten Ist-Werte.

Eine diese Geschwindigkeitsregelung im Sinne des Oberbegriffs überlagernde Druckregelung bewirkt, daß bei Erreichen des vom Programm vorgesehenen zulässigen Druckes automatisch eine Druckregelung gefahren wird, die auf der Grundlage der vom zugehörigen Druckfühler gelieferten Ist-Werte erfolgt.

Unter "Regelventil" im Sinne des Oberbegriffes ist ein an sich bekanntes (vergl. hierzu Druckschrift "Regelventile von Bosch"-13, K 6/VKD 2-AKY 013/2 De (4.85) - 1987761302, S. 3-50) Ventil mit Schiebefunktion zu verstehen, das in Verbindung mit einem Streckenspannungswandler und einem Druckfühler in der Lage ist, sowohl auf der Zulaufseite als auch der Ablaufseite einen geregelten Druck zu entfalten.

Bei einer bekannten Hydraulikeinrichtung dieser Art (DE-PS 30 44 137) liegen die Voraussetzungen für eine extrem kurze und trotzdemleistungsstarke Formschließeinheit vor, bei welcher es nicht erforderlich ist, bei jedem Öffnungs- bzw. Schließhub der Formschließeinheit das gesamte verdrängte Drucköl zum Tank zu führen. Auch ist der Übergang von der Schließperiode der Formschließeinheit in ihre Zuhalteperiode insofern problemlos, als der Schließhub ausschließlich von einer Schließeinheit bewirkt wird, welche hydraulische vom Druckzylinder abgesperrt ist und die Schließkratt des Antriebszylinders während der Zuhalteperiode unverändert weiterwirkt.

Es ist auch bekannt (DE-PS 32 38 111), bei einer Hydraulikeinrichtung der oben in Betracht gezogenen Gattung den Durchflußquerschnitt der Verbindungskanäle zwischen dem Niederdruckraum des Druckzylinders und den Zylinderräumen der Ausgleichszylinder durch ein elektrisch verstellbares Drosselventil in Abhängigkeit von einem vorbestimmten Arbeitsprogramm zu steuern. Durch eine solch Weiterbildung können auch schwere Formschließeinheiten mit hoher Geschwindigkeit störungsfrei betrieben werden. Andererseits ist auch bei bedarfsweiser niedriger Fahrgeschwindigkeit ein ruhiger, d.h. druckfreier Lauf des Formträgers gewährleistet. Zudem ist es möglich, die Formschließeinheit lageunabhängig einzusetzen. Der Geschwindigkeitsablauf der Schließ- und Öffnungsbewegungen und die zeitliche Bemessung der Bremsphasen kann nach Programm ablaufen. Eine schwer zu öffnende Spritzgießform kann mit erhöhter Kraft geöffnet werden, ohne daß eine zusätzliche Kolben-Zylinder-Einheit erforderlich ist.

Das die genannten Vorteile zeitigende Drosselventil und sein Einbau in die Formschließeinheit ist allerdings relativ aufwendig, zumal die zu steuernden Verbindungskanäle über das außerhalb des Druckzylinders angeordnete Ventil geführt werden müssen. Hierfür sind Kanalbohrungen in das die Hydraulikeinrichtung tragende Montageformstück beim Guß desselben mit Hilfe von Kernen einzubringen. Es hat sich gezeigt, daß solche Fertigungsverfahren nicht leicht zu beherrschen sind.

Im übrigen ist auch eine elektrohydraulische Einrichtung zur Steuerung eines doppelt wirkenden Hydromotors bekannt, dessen beide Seiten unabhängig voneinander jeweils über ein elektrohydraulisch betätigtes 3-Wege-Stetigventil ansteuerbar sind. Die Stetigventile werden jeweils von einem 4/4-Proportional-Vorsteuerventil angesteuert. Die Vorsteuerventile stehen über getrennte elektrische Kanäle mit einem elektronischen Steuergerät in Verbindung, das entsprechend der jeweiligen Antriebsaufgabe am Hydrozylinder Steuergrößen erarbeitet.

Hiervon ausgehend liegt der Erfindung die Aufgabe zugrunde, eine Hydraulikeinrichtung der eingangs genannten Art derart weiterzubilden, daß die in Betracht gezogenen Vorteile (Patent 32 38 111) bei erhöhter Präzision und besserer Anpassbarkeit an die jeweiligen Betriebserfordernisse unter Vermeidung eines Drosselventils auf steuerungstechnischem Wege erreichbar sind.

Diese Aufgabe wird erfindungsgemäß durch die im Kennzeichen des Patentanspruches 1 genannten Merkmale gelöst. Bei einer solchen Ausbildung können die Fertigungskosten im Vergleich zu der aus der DE-PS 32 38 111 genannten Hydraulikeinrichtung wesentlich gesenkt werden, weil das bislang erforderlich Drosselventil entfällt. Eine präzisere Arbeitsweise und eine bessere Anpassbarkeit der Hydraulikeinrichtung ergibt sich dadurch, daß alle Bewegungen des Antriebszylinders und gegebenenfalls der Zuhaltedruck (vergl. Anspruch 7) je durch eine hydraulische Kraft bewirkt werden, die aus der Differenz gegensätzlicher, geregelter Drücke im Antriebszylinder bzw. im Druckzylinder resultieren. Die Ausbildung des die Überströmkanäle im Kolben 25 des Druckzylinders 20,25 steuernden Ringkolbens 43 als einfache zylindrische Hülse gemäß den Patentansprüchen 9, 10 gewährleistet eine extrem hohe Steuergeschwindigkeit.

Weitere Ausgestaltungen du Erfindung ergeben sich aus den Unteransprüchen.

Nachstehend wird die Erfindung anhand der Zeichnung an einem Ausführungsbeispiel erläutert.

Es zeigen:

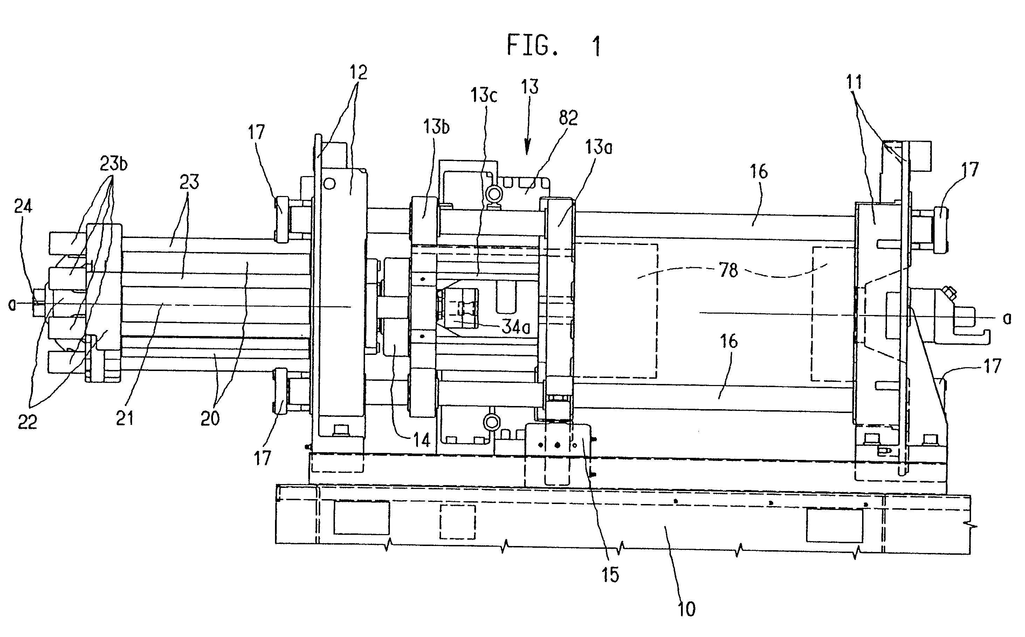

Fig. 1    Die in die Formschließeinheit der Kunststoff-Spritzgießmaschine eingebaute Hydraulikeinrichtung,

Fig. 2    die Hydraulikeinrichtung in vergrößerter Darstellung im horizontalen Schnitt durch die Achse der Formschließeinheit (bewegbarer Formträger in rückwärtiger Stellung),

Fig. 3    die Antriebseinrichtung gemäß Fig. 2 im Schnitt durch die Achse der Formschließeinheit,

Fig. 4    den hydraulischen Kreislauf der Antriebseinrichtung in schemiatischer Darstellung und

Fig. 5-8    die Schaltungen der Hydraulikeinrichtung.

Ein stationärer Formträger 11 und eine Montageplatte 12 sind am Maschinenfuß 10 befestigt und über Säulen 16 zu einem starren Rahmen miteinander verbunden. Zu diesem Zweck sind Befestigungseinrichtungen 17 an den freien Enden der Säulen 16 vorgesehen. Auf den Säulen 16 ist ein bewegbarer Formträger 13 mit einer vorderseitigen Druckübertragungswand 13a, einer rückseitigen Druckaufnahmewand 13b sowie mit Versteifungsrippen 13c verschiebbar gelagert. Der Formträger 13 ist mittels Gleitschuhen 15 auf Gleitleisten des Maschinenfußes 10 abgestützt. Die Hydraulikeinrichtung umfaßt einen in der Achse a-a der Formschließeinheit angeordneten hydraulischen Druckzylinder 20,25 zum Aufbau des Zuhaltedruckes für die Spritzgießform 78. Die vom Druckkolben 25 begrenzten Zylinderräume (Hochdruckraum 52, Niederdruckraum 50) stehen über Überströmkanäle 42 des Druckkolbens 25 miteinander in Verbindung. Die Überströmkanäle 42 sind mittels eines hydraulisch betätigbaren Ventils absperrbar, das weiter unter im einzelnen beschrieben wird. Ein in der Achse a-a der Formschließeinheit liegender hydraulischer Antriebszylinder 27,47b mit einem stationären Kolben 47b ermöglicht das Schließen und Öffnen der Spritzgießform 78. Der eigentliche Zylinder dieses Antriebszylinders 27,47b ist durch die Kolbenstange 27 des hydraulischen Druckzylinders 20,25 gebildet. Zwei diametral zum hydraulischen Druckzylinder 20,25 angeordnete Kolben-Zylinder-Einheiten dienen als Ausgleichszylinder 21,26. Ihre Kolben 26 sind nur einseitig beaufschlagbar. Die Ausgleichszylinder 21,26 dienen zur Aufnahme bzw. Abgabe von aus dem Druckzylinder 20,25 kommenden oder an diesen abzugebenden Drucköl. Der Niederdruckraum 50 steht mit den Zylinderräumen 51 der Ausgleichszylinder 21,26 in offener Verbindung. Die Kolben 26 der Ausgleichszylinder 21,26 und der Druckkolben 25 sind je über ihre zugehörigen Kolbenstangen 28,27 mit dem Formträger 13 verbunden. Dabei setzt die Kolbenstange 27 über eine zentrale Verteilerplatte 14 an der Druckaufnahmewand 13b des Formträgers 13 an.

Der Kolben 47b des Antriebszylinders 27,47b ist als ein beidseits beaufschlagbarer Kolben ausgebildet. Die Antriebsgeschwindigkeit des Antriebszylinders ist durch eine synchrone Druckregelung in den je mit einem Druckfühler 74,74' versehenen Verbindungskanälen 48c,68 nach Programm bestimmbar, welche Verbindungskanäle von einem Regelventil 64 der Hydraulikeinrichtung zu den beiden Zylinderräumen 48,80 des Antriebszylinders 27,47b führen.

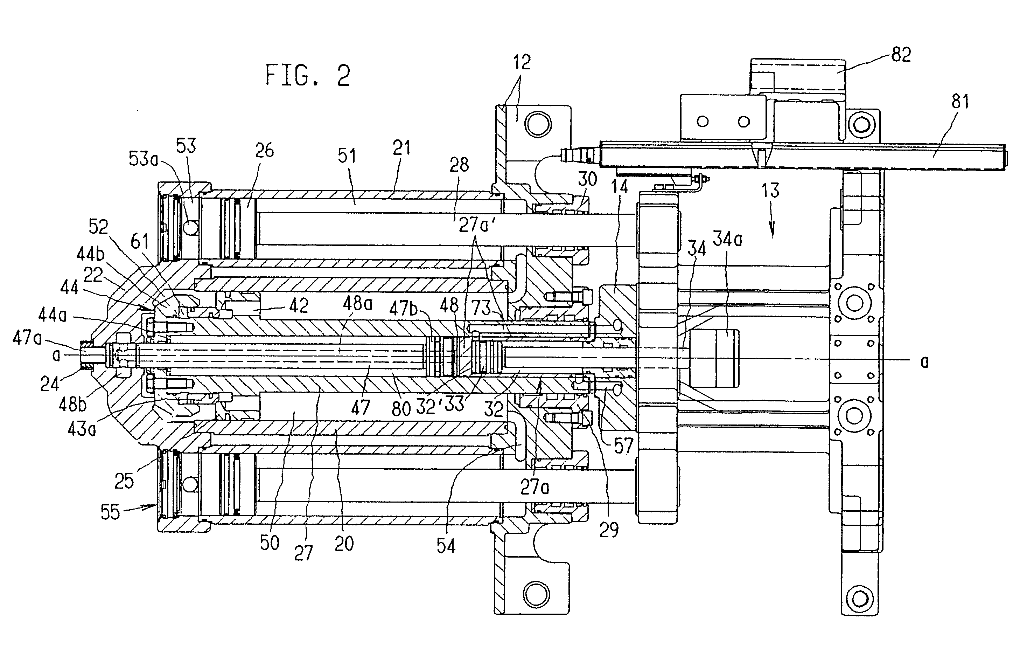

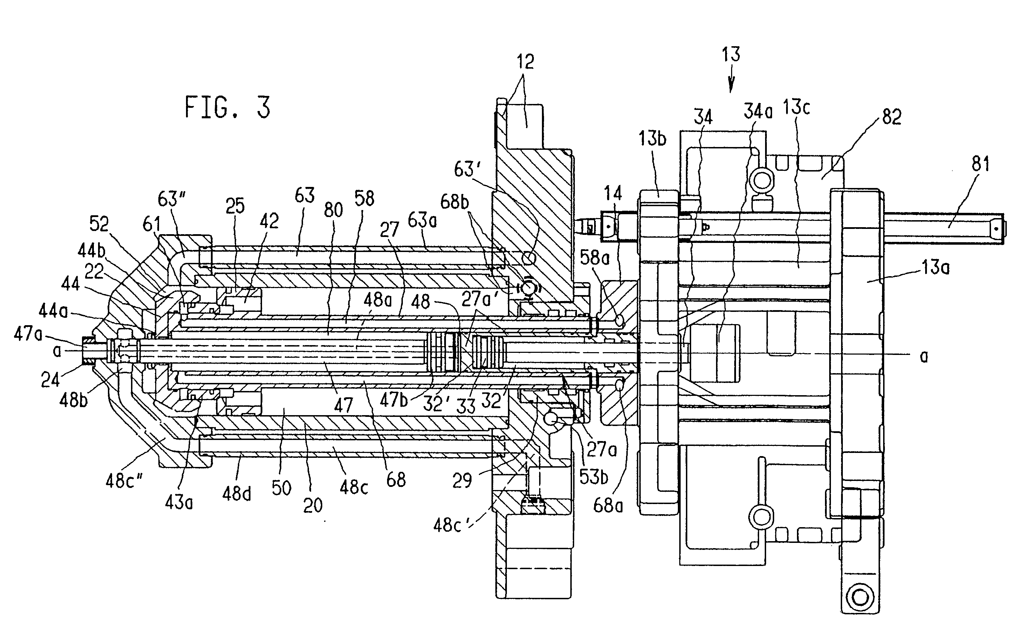

Wie insbesondere aus der Figur3 ersichtlich, ist sowohl ein Abschnitt des Verbindungskanals 48c zum gießformseitigen Zylinderraum 48 des Antriebszylinders 27,47b, als auch ein Abschnitt des Verbindungskanals 63 zum Hockdruckraum 52 als Hülse 48d bzw. 63a ausgebildet. Die Hülse 48d bzw. 63a verbindet eine Kanalbohrung 48c bzw. 63 in der die Hydraulikeinrichtung tragenden, stationären und durch ein Gußstück gebildeten Montageplatte 12 mit einer Kanalbohrung 48c'' bzw. 63'' in einem rückseitigen Zylinderflansch 22. Die eigentlichen Zylinder 20 und 21 des Druckzylinders 20,25 und der Ausgleichszylinder 21,26 sind durch Stahlhülsen gebildet, die gießformseitig von der Montageplatte 12 und rückseitig von einem Zylinderflansch 22 je zentrierend aufgenommen sind. Dadurch ergibt sich für die Hydraulikeinrichtung eine extrem kompakte Bauweise, zu deren Aufbau und Arbeitsweise im einzelnen noch auszuführen ist:29 und 30 sind die Deckel von Druck- und Ausgleichszylinder. Die hydraulische passiven athmosphärischen Räume 53 der Ausgleichszylinder 21,26 sind rückseitig von luftdurchlässigen Deckeln 55 im Zylinderflansch 22 begrenzt. Mit 53a sind Öffnungen für einen Lecköabfluß bezeichnet. Ein die Bewegungen der Kolbenstange erfassender Streckenspannungswandler 81 ist an einem torbogenartigen Montagebügel 82 für die Schutzhaube der Formschließeinheit angeordnet. Der Antriebszylinder ist mittels topfartigem Deckels 44 abgedeckt, der von der Kolbenstange 47 zentral und dichtend durchgriffen ist. Dabei begrenzt ein Ringflansch 44a, welcher rückseitig in die Bohrung der als Zylinder dienenden Kolbenstange 27 dichtend eintaucht, den Zylinderraum 80. Ein axialer Ringflansch 44b des Deckels 44 umschließt das rückwärtige Ende der Kolbenstange und begrenzt einen Zylinderraum 61, der durch eine axiale, ringförmige Ausnehmung des axialen Ringflansches 44b gebildet ist. Eine innere zylindrische Mantelfläche des axialen Ringflansches 44b im Bereich der Ausnehmung dient als äußeres Gleitlager für einen Ringkolben des die Überströmkanäle 42 beim Druckkolben 25 steuernden Ventils. Der Ringkolben 43 ist als einfache Hülse mit zylindrischer innerer und äußerer Mantelfläche gestaltet. Diese Hülse ist auf einem Endabschnitt der Kolbenstange 27 gleitbar gelagert, welcher Endabschnitt sich vom Druckkolben 25 aus nach hinten erstreckt. Der Ventilsitz des genannten Ventils ist durch eine Ringkante des Druckkolbens gebildet, wie aus den Fign 2,3 ersichtlich. Das Regelventil regelt die von ihm beherrschten Drucköströme auf seiner Zu- und Ablaufseite gleichermaßen. Die von und zu den Zylinderräumen 61,80,52,48 und den miteinander kommunizierenden Zylinderräumen 50,51 führenden Verbindungskanäle sind wie folgt konkreter zu beschreiben:

Der ringförmige Zylinderraum 61 ist mit der Druckleitung P mit Hilfe eines Schiebers 66 über den Verbindungskanal 58 in Verbindung setzbar, welche eine Axialbohrung in der Kolbenstange 27 und eine Kanalbohrung 58a in der Druckplatte 14 umfaßt (Ventilsteuerung).

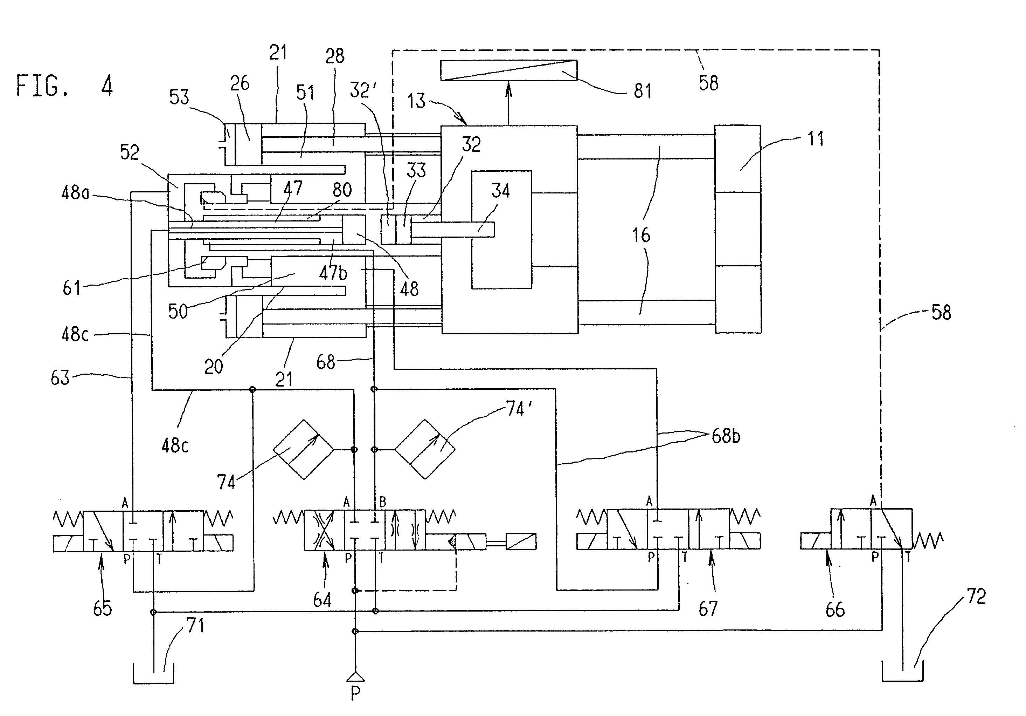

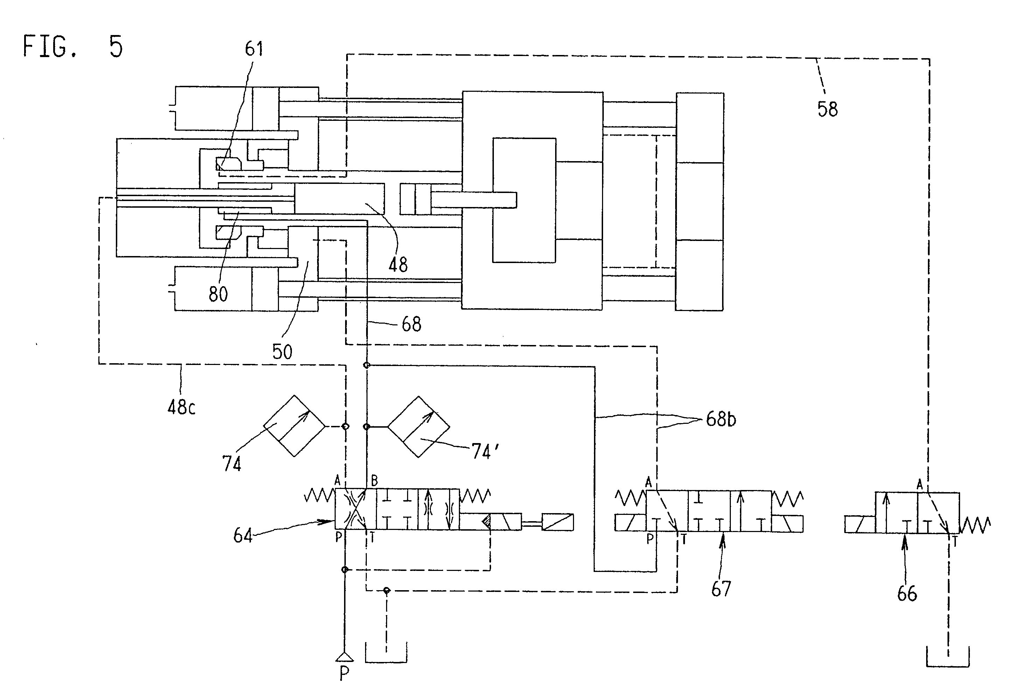

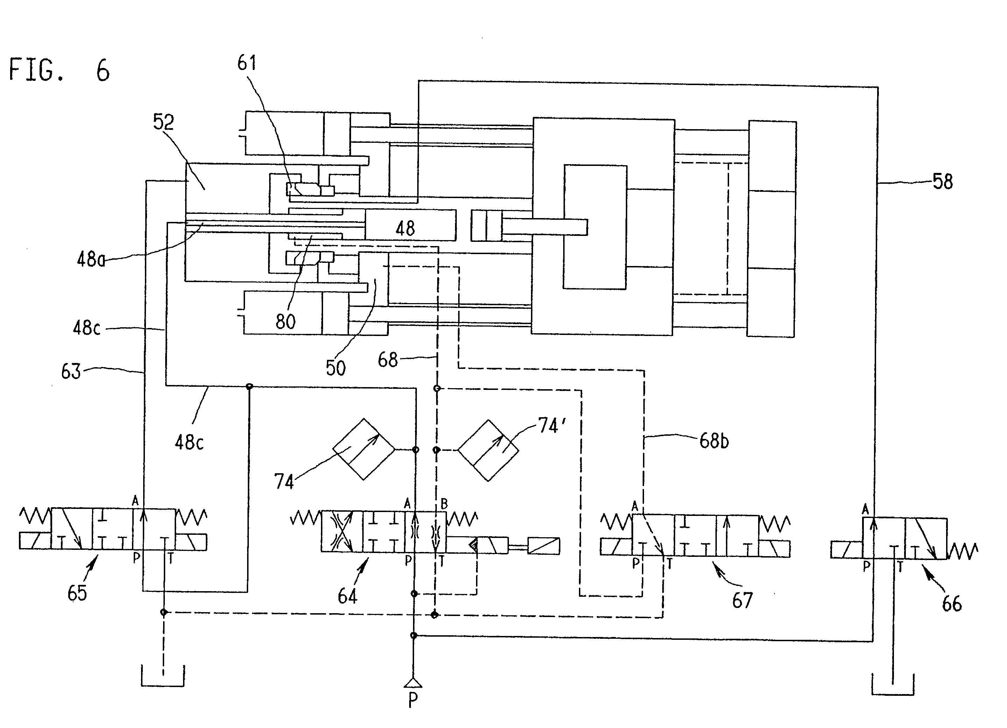

Der Zylinderraum 80 ist mit der Druckleitung P über die Verbindungsleitung 68 und dem Regelventil 64 in Verbindung setzbar (Fig. 4,5), welche Verbindungsleitung die eine Axialbohrung in der Kolbenstange 27 und Kanalbohrung 68a in der Verteilerplatte 14 umfaßt. Wie aus Fig. 4,6 ersichtlich, ist der Hochdruckraum 52 mit dem beim Schließen der Spritzgießform 78 mit Druckleitung P verbundener Verbindungskanal 48c mit Hilfe des Mehrwegschiebers 65 über einer Verbindungskanal 63 in Verbindung setzbar, welcher Verbindungskanal 63 Kanalbohrungen 63',63" in der Montageplatte 12 und im Zylinderflansch 22 sowie eine die genannten Kanalbohrungen verbindende Hülse 63a umfaßt und der vom Verbindungskanal abzweigt.

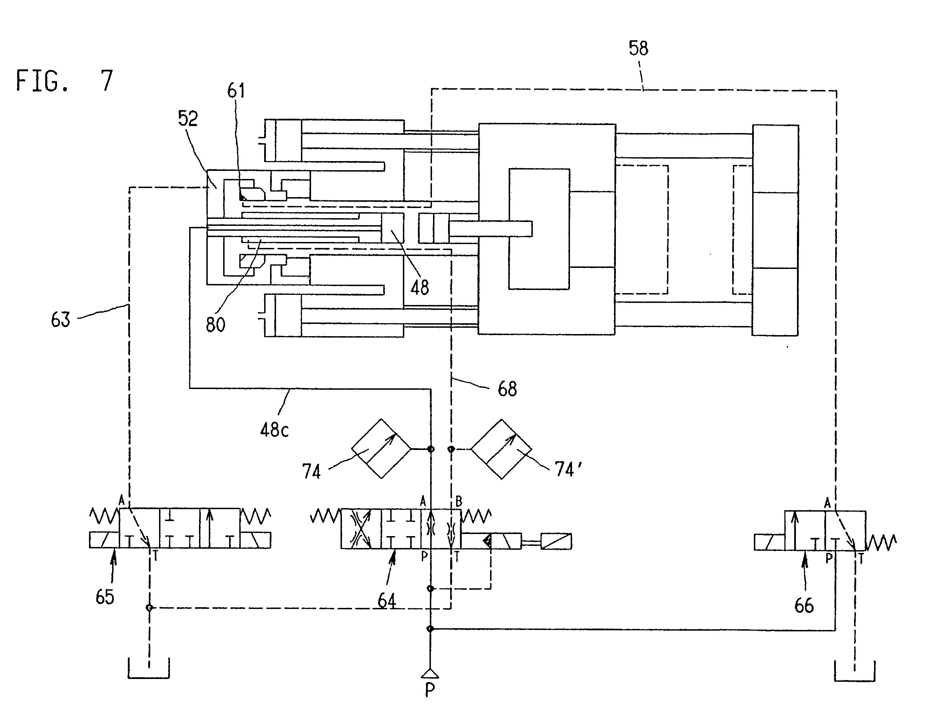

Der gießformseitige Zylinderraum 48 des Antriebszylinders 27,47b ist über den Verbindungskanal 48c mit der Druckleitung P mit Hilfe des Regelventils 64 in Verbindung setzbar (Fig. 4,7), welcher (48c) eine Axialbohrung in der Kolbenstange 47, einen Ringkanal 48b im Zylinderflansch 22 sowie Kanalbohrungen 48c' und 48c" in der Montageplatte 12 und in dem Zylinderflansch 22 sowie eine Hülse 48d umfaßt, welche die genannten Kanalbohrungen miteinander verbindet.

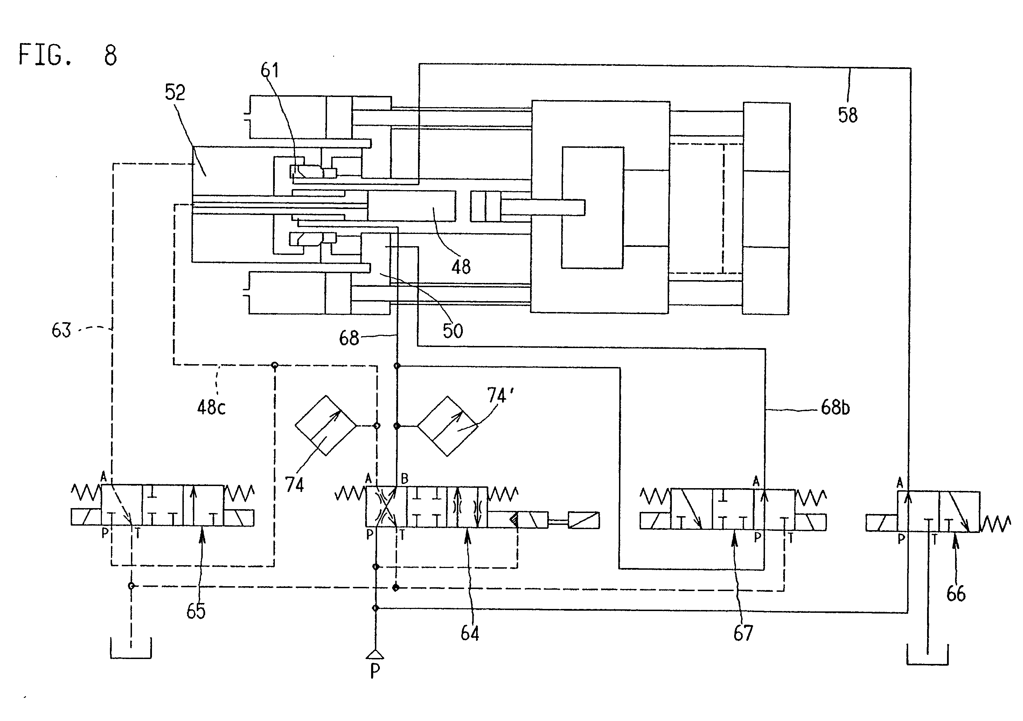

Wie insbesondere aus den Figuren 4,8 erkennbar ist, sind die beiden über die Überströmkanäle 54 miteinander kommunizierenden Zylinderräume 50,51 des Druckzylinders 20,25 und der Ausgleichszylinder 21,26 mit der Druckleitung P mit Hilfe des Regelventils 64 und der Schiebers 67 über einen Verbindungskanal 68b verbindbar, der eine Kanalbohrung (68b in Fig. 3) in der Montageplatte umfaßt.

Der Zylinderraum 48 der Antriebszylinders 27,47b ist gießformseitig von einem dichtend in die hohle Kolbenstange 27 eingesetzten, topfartigen Formstück 27a' begrenzt. In diesem Formstück 27a' ist ein Kolben 33 geführt. Das Formstück 27a' bildet mit dem Kolben 33 einen hydraulischen Auswerferzylinder 27a, mit dessen Hilfe die fertigen Spritzlinge aus der offenen Spritzgießform 78 ausgestoßen werden können. Die Kolbenstange 34 des Kolbens 33 ist mittels einer Kupplung 34a mit einer zu den Auswerferorganen der Spritzgießform 78 führenden Verbindungsstange (zeichnerisch nicht dargestellt) kuppelbar. Die Zylinderräume 32,32' des hydraulischen Auswerferzylinders 27a sind über Kanalbohrungen 57,73 mit Druckmedium beschickbar, wie aus Fig. 2 ersichtlich. In dem Schema gemäß Fig. 4,8 ist verdeutlicht, daß der vom Regelventil 64 zum Zylinderraum 80 des Antriebszylinders 27,47b führende Verbindungskanal 68 über einen abzweigenden Verbindungskanal 68b mit Hilfe des Schiebers 67 mit der Druckleitung P in Verbindung setzbar ist (Öffnen der Spritzgießform 78 mit großer Zylinderfläche).

Der vom Regelventil 64 zum Zylinderraum 48 des Antriebszylinders 27,47b führende Verbindungskanal 48c ist über einen abzweigenden Verbundungskanal (63 in Fig. 3) mit dem Hochdruckraum 52 in Verbindung setzbar, welcher Verbindungskanal 63 vom Mehrwegschieber 65 beherrscht ist. In den Fign. 5-8 sind die Fließwege des Drucköls beim Öffnen der Spritzgießform mit kleiner Kraft (Fig. 5), beim Öffnen der Spritzbgießform mit großer Kraft (Fig. 8), beim Schließen der Spritzgießform (Fig. 7) und beim Zuhalten der Spritzgießform (Fig. 6) verdeutlicht. Dabei weisen die mit der Druckleitung P in Verbindung stehenden Leitungen eine ausgezogene, die mit dem Tank in Verbindung stehenden Leitungen eine gestrichelte Linienführung auf. In diesem Zusammenhang ist darauf hinzuweisen, daß beim Öffnen und Schließen der Spritzgießform (also beim Fahren des bewegbaren Formträgers 13) das die Überströmkanäle 42 im Druckkolben 25 steuernde Ventil offen ist, so daß beim Schließen der Spritzgießform das Drucköl aus den Zylinderräumen 50,51 in den Hochdruckraum 52 überströmen kann, der hierbei nicht unter Hochdruck steht und daß beim Öffnen der Spritzgießform das Drucköl aus dem Hochdruckraum in die Zylinderräume 50,51 überströmen kann. Dadurch wird erreicht, daß zumindest der überwiegende Teil des Drucköls beim Öffnen und Schließen der Spritzgießform nur kurze Wege innerhalb der Hydraulikeinrichtung zurückzulegen hat, jedenfalls nicht über den Tank 71,72 zu führen ist.

Ist die Spritzgießform 78 schwer zu öffnen, so wird diese in einer allerersten Phase bei geschlossenen Überströmkanälen 42 gemäß Fig. 8 mit großer Zylinderfläche geringfügig geöffnet, um sodann mit kleiner Kraft gemäß Fig. 5 in Offenstellung gefahren zu werden.

Alle von der Hydraulikeinrichtung ausübbaren Funktionen sind mit Hilfe des Regelventils 64 und der Schieber 65-67 nach Programm regelbar. Zu beachten ist dabei, daß beim Öffnen (Fig. 5) und Schließen (Fig. 7) der Spritzgießform der Kolben 47b des Antriebszylinders 27,47b je in aller Regel beidseitts beaufschlagt ist und daß somit die Öffnungs- bzw. Schließbewegung je aus der Differenz der auf die vordere und rückseitige Fläche des Kolbens 47b einwirkenden hydraulischen Kraft resultiert. Auf diese Weise kann die Öffnungs- bzw. Schließbewegung durch programmierte Regelung den zahlreichen Erfordernissen angepaßt werden, welche sich aus der jeweiligen Art des herzustellenden Spritzlings bzw. der Art des verarbeiteten Kunststoffmaterials ergeben.

In den Fign. 5,7 sind jeweils nur diejenigen Strömungswege des Drucköls aufgezeigt, welche die hydraulische Kraft auf den Kolben 47b des Antriebszylinders 27,47b ausüben.

Bei Ablauf eines Spritzzyklusder Spritzgießmaschine arbeitet die Hydraulikeinrichtung ausgehend von einer geschlossenen Spritzgießform 78 wie folgt: Die Spritzgießform wird gemäß Fig. 5 mit kleiner und gemäß Fig. 8 mit großer Zylinderfläche geöffnet, letzteres derart, daß die hydraulische Schaltung gemäß Fig. 8 nach geringfügiger Trennung der Gießformhälften nach Programm in eine Schaltung gemäß Fig. 5 übergeht. Sodann werden die fertigen Spritzlinge mit Hilfe des Auswerferzylinders 27a aus der offenen Spritzgießform 78 ausgeworfen. Danach wird die Spritzgießform gemäß Fig. 7 geschlossen. Beim Einspritzen des Kunststoffmaterials in die Spritzgießform 78 und in einer 'Nachdruckphase' bis zum Erhärten des in der Spritzgießform befindlichen Kunststoffmaterials wird die Spritzgießform gemäß Fig. 6 mit großer Kraft zugehalten.

Ein weiterer Vorteil der Hydraulikeinrichtung ist nicht zuletzt auch darin zu sehen, daß bei ihr ein geregeltes Zuhalten der Spritzgießform gewährleistet ist. Die Kolbenstange ist über den Zapfen 47a mittels Mutter 24 am Zylinderflansch 22 gesichert, der mittel Haltestangen 23 mit der Montageplatte 12 verspannt ist. Mit 23b sind die Köpfe der Haltestangen 23 bezeichnet.

Figur 6 zeigt, daß der vom Regelventil 64 zum Zylinderraum 48 des Antriebszylinders 27,47b führende Verbindungskanal 48c mittels Mehrwegschieber 65 über einen abzweigenden Verbindungskanal 63 mit dem Hochdruckraum in Verbindung gesetzt und dadurch der über den Druckfühler 74 einseitig gemessene, also geregelte Zuhaltedruck aufgebaut ist, wobei der Niederdruckraum 50 mittels Mehrwegschieber 67 zum Tank 71 geschaltet ist. Andererseits gibt das Regelventil 64 die Möglichkeit an seiner Ablaufseite und damit über den Verbindungskanal 68 im Zylinderraum 80 der Antriebszylinders 27,47b einen Druck zu entfalten und diesen Druck zu regeln. Dieser geregelte Druck kann aus dem Verbindungskanal 68 mit Hilfe des abzweigenden Verbvindungskanals 68b mit Hilfe des Mehrwegschiebers 67 abgenommen und auch dem Niederdruckraum 50 vermittelt werden. Somit ist beim Zuhalten der Spritzgießform sowohl der Druckkolben 25 vom Niederdruckraum 50 her, als auch der Kolben 47b des Antriebszylinders 27,47b vom Zylinderraum 80 her bei geregeltem Druckverlauf hydraulisch beeinflußbar. Aus der Differenz beidseitiger hydraulischer Beeinflussung des Druckkolbens 25 und des Kolbens 47b resultiert daher ein geregelter Zuhaltedruck mit Druckdifferenzmessung über die Druckfühler 74,74'.

**Ansprüche**

1. Hydraulikeinrichtung für die Formschließeinheit einer Kunststoff-Spritzgießmaschine mit einem in der Achse (a-a) der Formschließeinheit angeordneten hydraulischen Druckzylinder (20, 25) zum Aufbau des Zuhaltedruckes für die Spritzgießform (78), dessen vom Druckkolben (25) begrenzten Zylinderräume (Hochdruckraum 52, Niederdruckraum 50) über Überströmkanäle (42) des Druckkolbens (25) miteinander in Verbindung stehen, welche Überströmkanäle (42) mittels eines hydraulisch betätigbaren Ventils absperrbar sind, mit einem hydraulischen Antriebszylinder (27, 47b) mit einem stationären Kolben (47b) zum Schließen der Spritzgießform (78), dessen eigentlicher Zylinder durch die Kolbenstange (27) des hydraulischen Druckzylinders (20, 25) gebildet ist,

mit zwei diametral zum hydraulischen Druckzylinder (20, 25) angeordneten, nur einseitig beaufschlagbaren Kolben-Zylinder-Einheiten (Ausgleichszylinder 21, 26) mit Kolben (26) zur Aufnahme bzw. Abgabe von aus dem Druckzylinder (20, 25) kommenden oder an diesen abzugebenden Drucköl,

wobei der Niederdruckraum (50) mit den Zylinderräumen (51) der Ausgleichszylinder (21, 26) in offener Verbindung steht, deren Kolben (26) wie auch der Druckkolben (25) je über die zugehörigen Kolbenstangen (28; 27) mit dem Formträger (13) der Formschließeinheit verbunden sind, sowie mit einem die Öffnungsbewegung und die Schließbewegung des Antriebszylinders (27,40b) über einen Strecken-Spannungswandler (81) nach einem Mengenprogramm regelnden Regelventil (64), welches Mengenprogramm über einen Druckfühler (74,74') von einer Druckregelung überlagert ist, dadurch gekennzeichnet, daß der stationäre Kolben (47b) des Antriebszylinders (27,47b) ein beidseits beaufschlagbarer Kolben und das Regelventil (64) als ein sowohl die Zulaufseite als auch die Ablaufseite regelndes Regelventil ausgebildet ist, durch welches die Antriebsgeschwindigkeiten des Antriebszylinders (27,47b) in Schließ- und Öffnungsrichtung je bei gleichzeitiger, beidseitiger Druckbeeinflussung des Kolbens (47b) nach dem Mengenprogramm über den die Bewegungen des bewegbaren Formträgers (13)erfassenden Strecken-Spannungswandler (81) bestimmbar sind,wobei in beiden, zu den Zylinderräumen (48,80) des Antriebszylinders (27,47b) führenden Verbindungskanälen (48,68) je ein Druckfühler (74,74') für eine überlagernde Druckregelung vorgesehen ist.

2. Hydraulikeinrichtung nach Patentanspruch 1, dadurch gekennzeichnet, daß sowohl ein Abschnitt des Verbindungskanals (48c) zum gießformseitigen Zylinderraum (48) des Antriebszylinders (27, 47b) als auch ein Abschnitt eines Verbindungskanals (63) zum Hochdruckraum (52) als Hülse (48d;63a) ausgebildet ist, welche Hülse (48d,63a) je eine Kanalbohrung (48c',63') in einer Hydraulikeinrichtung tragenden, stationären Montageplatte (12) mit einer Kanalbohrung (48c",63") in einem rückseitigen Zylinderflansch (22) verbindet.

3. Hydraulikeinrichtung nach Patentanspruch 2, dadurch gekennzeichnet, daß sämtliche Verbindungskanäle (48a;58;63;68;68b) der Hydraulikeinrichtung über Kanalbohrungen (48c;58a;63';68a;68b) der Montageplatte (12) oder einer Verteilerplatte (14) am bewegbaren Formträger (13) führen.

4. Hydraulikeinrichtung nach einem der vorhergehenden Patentansprüche, dadurch gekennzeichnet, daß der Zylinderraum (48) des Antriebszylinders (27,47b) gießformseitig von einem dichtend in die hohle Kolbenstange (27) eingesetzten, topfartigen Formstück (27a') begrenzt ist und daß in diesem Formstück ein Kolben (33) geführt ist, der mit dem Formstück (27a') einen hydraulischen Auswerferzylinder (27a) bildet.

5. Hydraulikeinrichtung nach einem der vorhergehenden Patentansprüche, dadurch gekennzeichnet, daß der vom Regelventil (64) zum Zylinderraum (80) des Antriebszylinders (27,47b) führende Verbindungskanal (68) mittels eines Mehrwegeschiebers (67) über einen abzweigenden Verbindungskanal (68b) mit dem Niederdruckraum (50) in Verbindung setzbar ist (Öffnen der Spritzgießform mit großer Zylinderfläche).

6. Hydraulikeinrichtung nach einem der Patentansprüche 1-4, dadurch gekennzeichnet, daß der von der Zulaufseite des Regelventils (64) zum Zylinderraum (48) des Antriebszylinders (27,47b) führende und mit Druckfühler (74) versehene Verbindungskanal (48c) mittels Mehrwegeschieber (65) über einen abzweigenden Verbindungskanal (63) mit dem Hochdruckraum (52) in Verbindung setzbar und der Niederdruckraum (50) mittels Mehrwegeschieber (67) zum Tank (71) schaltbar ist (geregeltes Zuhalten der Spritzgießform mit einseitiger Druckmessung über den Druckfühler (74)).

7. Hydraulikeinrichtung nach einem vorhergehenden Patentansprüche 1-4, dadurch gekennzeichnet, daß die mittels Druckfühler (74) geregelte Zulaufseite des Regelventils (64) über den Verbindungskanal (48c) mit dem Zylinderraum (48) des Antriebszylinders (27,47b) und zugleich über einen abzweigenden Verbindungskanal (63) mit Hilfe des Mehrwegeschiebers (65) mit dem Hochdruckraum (52) in Verbindung setzbar ist, wobei die mittels Druckfühler (74') geregelte Ablaufseite des Regelventils (64) über den Verbindungskanal (68) mit dem Zylinderraum (80) des Antriebszylinders (27,27b) und mittels des Mehrwegeschiebers (67) über den abzweigenden Verbindungskanal (68b) mit dem Niederdruckraum (50) in Verbindungs steht.

8. Hydraulikeinrichtung nach einem der vorhergehenden Patentansprüche, dadurch gekennzeichnet, daß der Streckenspannungswandler (81) an einem Montagebügel (82) der Formschließeinheit angeordnet ist.

9. Hydraulikeinrichtung nach einem der vorhergehenden Patentansprüche, dadurch gekennzeichnet, daß der die Überströmkanäle (42) im Kolben (25) des Druckzylinders (20,25) steuernde Ringkolben (43) als eine einfache zylindrische Hülse ausgebildet ist.

10. Hydraulikeinrichtung nach Patentanspruch 9, dadurch gekennzeichnet, daß die den Ringkolben (43) bildende Hülse von einem axialen Ringflansch (44b) eines Deckels (44) übergriffen ist, welcher den rückseitigen Zylinderraum (80) des Antriebszylinders (Kolbenstange 27 und Kolben 27b) rückseitig abschließt.

## Claims

1. A hydraulic arrangement for a plastics injection moulding machine with a hydraulic cylinder (20,25), disposed in the axis (a - a) of the mould locking unit, for building up the locking pressure for the injection mould (78) whose cylinder chambers (high-pressure chamber 52, low-pressure chamber 50) defined by the pressure piston (25) are connected to one another via overflow ducts (42) of the pressure piston (25), said overflow ducts (42) being closable by means of a hydraulicallyoperated valve, with a hydraulic drive cylinder (27, 47b) with a stationary piston (47b) for closing the injection mould (78), whose actual cylinder is formed by the piston rod (27) of the hydraulic pressure cylinder (20, 25), with two piston-cylinder units (compensating cylinders 21, 26) disposed diametrally relative to the hydraulic pressure cylinder (20, 25) and which may be pressurised at one side only, with pistons (26) for receiving or delivering pressure oil coming from the pressure cylinder (20,25) or to be delivered thereto, the low pressure chamber (50) being in open connection with the cylinder chambers (51) of the compensating cylinders (21, 26), whose pistons (26) as well as the pressure pistons (25) are each connected via the associated piston rods (28; 27) to the mould carrier (13) of the mould locking unit, and with a control valve (64) regulating the opening and closing movements of the drive cylinder (27, 47b) via a local voltage transformer (81) in accordance with a rate program, said rate program having superimposed thereon a pressure control system via a pressure transducer (74, 74'), characterised in that the stationary piston (47b) of the drive cylinder (27, 47b) is a piston capable of receiving pressure on both sides, and the control valve (64) is designed as a valve regulating both the inlet and the outlet sides, by means of which the drive velocities of the drive cylinder (27, 47b) may be determined in the closing and opening directions, in each case with simultaneous pressure influence on both sides of the piston (47b) in accordance with the rate program via the local voltage transformer (81) which detects the movements of the displaceable mould carrier (13), a pressure transducer (74, 74') being provided in both connector ducts (48, 68) leading to the cylinder chambers (48, 80) of the drive cylinder (27, 47b), in order to provide a superimposed system of pressure control.

2. A hydraulic arrangement according to Claim 1, characterised in that both one portion of the connector duct (48c) to the cylinder chamber (48) of the drive cylinder (27, 47b), on the same side as the mould, and one portion of the connector duct (63) to the high-pressure chamber (53) is in the form of a sleeve (48d; 63a), which in each case connects a respective duct bore (48c', 63') in a stationary mounting plate (12) carrying a hydraulic arrangement, with a duct bore (48c'', 63'') in a rear-side cylinder flange (22).

3. A hydraulic arrangement according to Claim 2, characterised in that all the connector ducts (48a; 58; 63; 68; 68b) of the hydraulic arrangement pass through duct bores (48c'; 58a; 63'; 68a; 68b) of the mounting plate (12) or of a distributor plate (14) on the displaceable mould carrier (13).

4. A hydraulic arrangement according to one of the foregoing Claims, characterised in that the cylinder chamber (48) of the drive cylinder (27, 47b) is defined on the same side as the mould by a can-shaped moulding (27a') inserted sealingly into the hollow piston rod (27), and that there is guided in this moulding a piston (33), which forms along with moulding (27a') a hydraulic ejector cylinder (27a).

5. A hydraulic arrangement according to one of the foregoing Claims, characterised in that the connector duct (68) leading from the control valve (64) to the cylinder chamber (80) of the drive cylinder (27, 47b) can be made to connect with the low-pressure chamber (50) by means of a multiple-way slide (67) via a branching connector duct (68b) (opening of injector mould with large cylinder surface).

6. A hydraulic arrangement according to one of Claims 1 to 4, characterised in that the connector duct (48c), leading from the inlet side of the control valve (64) to the cylinder chamber (48) of the drive cylinder (27, 47b), and provided with pressure transducers (74) can be made to connect, by means of a multiple-way slide (65) and via a branching connector duct (63), with the high-pressure chamber (52), and the low-pressure chamber (50) may be connected by means of a multiple-way slide (67) with the reservoir (71). (Regulated locking of the injector mould with pressure measurement on one side by means of the pressure transducer).

7. A hydraulic arrangement according to one of the foregoing Claims, characterised in that the inlet side, regulated by means of pressure transducers (74), of the control valve (64) may be made to connect via the connector duct (48c) with the cylinder chamber (48) of the drive cylinder (27, 47b), and simultaneously may be made to connect, via a branching connector duct (63) and by means of the multiple-way slide (65), with the high-pressure chamber (52), the outlet side, controlled by a pressure transducer (74'), of the control valve (64) is connected via the connector duct (68) with the cylinder chamber (80) of the drive cylinder (27, 27b), and is in connection with the low-pressure chamber (50) by means of the multiple-way slide (67) via the branching connector duct (68b).

8. A hydraulic arrangement according to one of the foregoing Claims, characterised in that the local voltage transformer (81) is disposed on a mounting clamp (82) of the mould locking unit.

9. A hydraulic arrangement according to one of the foregoing Claims, characterised in that the annular piston (43) controlling the overflow ducts (42) in the piston (25) of the pressure cylinder (20, 25) is in the form of a simple cylindrical sleeve.

10. A hydraulic arrangement according to Claim 9, characterised in that the sleeve forming the annular piston (43) has extending over it an axial annular flange (44b) of a cover (44) which encloses the rear cylinder chamber (80) of the drive cylinder (piston rod 27 and piston 27b) at the back.

**Revendications**

1. Dispositif hydraulique pour l'unité de fermeture du moule d'une machine de moulage par injection de matières plastiques,
comprenant un cylindre de pression hydraulique (20, 25) qui est disposé dans l'axe (a-a) de l'unité de fermeture du moule, qui est destiné à établir la pression de maintien en position fermée du moule de moulage par injection (78) et dont les chambres de cylindre délimitées par le piston de pression (25) (chambre à haute pression 52, chambre à basse pression 50) communiquent entre elles par des canaux de tropplein (42) du piston de pression (25), lesdits canaux de trop-plein (42) pouvant être fermés au moyen d'une soupape à actionnement hydraulique,
comprenant un cylindre d'entraînement hydraulique (27, 47b) muni d'un piston fixe (47b) qui est destiné à fermer le moule de moulage par injection (78) et dont le cylindre proprement dit est constitué par la tige de piston (27) du cylindre de pression hydraulique (20, 25),
comprenant deux unités piston-cylindre (cylindres d'équilibrage 21, 26) qui sont diamétralement opposées par rapport au cylindre de pression hydraulique (20, 25), qui ne peuvent être soumises à l'action de la pression que d'un seul côté et qui sont munies de pistons (26) pour recevoir ou délivrer, respectivement, le fluide hydraulique qui provient du cylindre de pression (20, 25) ou qui doit lui être délivré, la chambre à basse pression (50) communiquant librement avec les chambres de cylindre (51) des cylindres d'équilibrage (21, 26) dont les pistons (26), tout comme les pistons de pression (25), sont reliés à chaque fois par l'intermédiaire des tiges de piston associées (28 ; 27) au porte-moule (13) de l'unité de fermeture du moule, ainsi qu'à une soupape de régulation (64) qui, par l'intermédiaire d'un transducteur trajet-tension (81), régule selon un programme portant sur les débits le déplacement d'ouverture et le déplacement de fermeture du cylindre d'entraînement (27, 47b), une régulation de la pression étant superposée audit programme portant sur les débits par l'intermédiaire d'un capteur de pression (74, 74'), caractérisé par le fait que le piston fixe (47b) du cylindre d'entraînement (27, 47b) est un piston qui peut être soumis des deux côtés à l'action de la pression et que la soupape de régulation (64) est réalisée sous la forme d'une soupape de régulation qui régule aussi bien le côté de l'admission que le côté de l'échappement, et au moyen de laquelle les vitesses d'entraînement du cylindre d'entraînement (27, 47b) dans la direction de la fermeture et de l'ouverture peuvent être déterminées à chaque fois lors d'une action simultanée de la pression sur les deux côtés du piston (47b), selon le programme portant sur les débits, et par l'intermédiaire du transducteur trajet-tension (81) qui capte les déplacements du porte-moule mobile (13), un capteur de pression (74, 74') destiné à une régulation de pression superposée étant prévu à chaque fois dans les deux canaux de liaison (48c, 68) qui conduisent aux chambres de cylindre (48, 80) du cylindre d'entraînement (27, 47b).

2. Dispositif hydraulique selon la revendication 1, caractérisé par le fait qu'aussi bien une section du canal de liaison (48c) allant vers la chambre de cylindre (48) du cylindre d'entraînement (27, 47b) qui est située du côté du moule qu'une section d'un canal de liaison (63) allant vers la chambre à haute pression (52), sont réalisées sous la forme d'un manchon (48d ; 63a), ledit manchon (48d ; 63a) reliant à chaque fois un perçage en canal (48c', 63') ménagé dans une plaque de montage fixe (12) portant le dispositif hydraulique à un perçage en canal (48c'', 63'') ménagé dans une bride arrière (22) du cylindre.

3. Dispositif hydraulique selon la revendication 2, caractérisé par le fait que l'ensemble des canaux de liaison (48c ; 58 ; 63 ; 68 ; 68b) du dispositif hydraulique conduisent au porte-moule mobile (13) par l'intermédiaire de perçages en canaux (48c' ; 58a ; 63' ; 68a ; 68b) de la plaque de montage (12) ou d'une plaque de répartition (14).

4. Dispositif hydraulique selon l'une des revendications précédentes, caractérisé par le fait que la chambre de cylindre (48) du cylindre d'entraînement (27, 47b) est limitée du côté du moule par une pièce façonnée en forme de pot (27a') qui est introduite de manière étanche dans la tige de piston creuse (27), et par le fait qu'est guidé dans cette pièce façonnée un piston (33) qui constitue avec la pièce façonnée (27a') un cylindre hydraulique d'éjection (27a).

5. Dispositif hydraulique selon l'une des revendications précédentes, caractérisé par le fait que le canal de liaison (68) qui conduit de la soupape de régulation (64) à la chambre de cylindre (80) du cylindre d'entraînement (27, 47b) peut être mis en communication avec la chambre à basse pression (50) au moyen d'un tiroir à plusieurs voies (67) et par l'intermédiaire d'un canal de liaison de dérivation (68b) (ouverture du moule de moulage par injection avec une surface de cylindre importante).

6. Dispositif hydraulique selon l'une des revendications 1 à 4, caractérisé par le fait que le canal de liaison (48c) qui conduit du côté de l'admission de la soupape de régulation (64) à la chambre de cylindre (48) du cylindre d'entraînement (27, 47b) et qui est muni du capteur de pression (74) peut être mis en communication avec la chambre à haute pression (52) au moyen du tiroir à plusieurs voies (65) et par l'intermédiaire d'un canal de liaison de dérivation (63), et que la chambre à basse pression (50) peut être branchée sur le réservoir (71) au moyen du tiroir à plusieurs voies (67) (maintien régulé du moule de moulage par injection en position fermée avec mesure de la pression sur un côté par l'intermédiaire du capteur de pression (74)).

7. Dispositif hydraulique selon l'une des revendications précédentes 1 à 4, caractérisé par le fait que le côté de l'admission de la soupape de régulation (64) qui est régulé au moyen du capteur de pression (74) peut être mis en communication avec la chambre de cylindre (48) du cylindre d'entraînement (27, 47b) par l'intermédiaire du canal de liaison (48c), et en même temps avec la chambre à haute pression (52) par l'intermédiaire d'un canal de liaison de dérivation (63) et à l'aide du tiroir à plusieurs voies (65), cependant que le côté de l'échappement de la soupape de régulation (64) qui est régulé au moyen du capteur de pression (74') est en communication avec la chambre de cylindre (80) du cylindre d'entraînement (27, 47b) par l'intermédiaire du canal de liaison (68), et avec la chambre à basse pression (50) au moyen du tiroir à plusieurs voies (67) et par l'intermédiaire du canal de liaison de dérivation (68b).

8. Dispositif hydraulique selon l'une des revendications précédentes, caractérisé par le fait que le transducteur trajet-tension (81) est disposé sur un étrier de montage (82) de l'unité de fermeture du moule.

9. Dispositif hydraulique selon l'une des revendications précédentes, caractérisé par le fait que le piston annulaire (43a) qui commande les canaux de trop-plein (42) dans le piston (25) du cylindre de pression (20, 25) est réalisé sous la forme d'un simple manchon cylindrique.

**10.** Dispositif hydraulique selon la revendication 9, caractérisé par le fait que le manchon qui constitue le piston annulaire (43a) est recouvert par un collet annulaire axial (44b) d'un couvercle (44) qui ferme du côté arrière la chambre de cylindre arrière (80) du cylindre d'entraînement (tige de piston 27 et piston 47b).

FIG. 1

FIG. 2

EP 0 272 626 B1

FIG. 3

FIG. 4

FIG. 5

FIG. 6

FIG. 7

FIG. 8

EP 0 272 626 B1